# EUROPEAN PATENT SPECIFICATION

(11) **EP 2 619 034 B1**
(45) Date of publication and mention of the grant of the patent: **08.01.2020**
(21) Application number: 11827050.3
(22) Date of filing: 16.09.2011
(51) Int. Cl.: B60P 3/41, B62D 33/077

(54) **LOAD GATE SYSTEM FOR A VEHICLE, AND A SUSPENSION ARRANGEMENT AND LOAD GATE FOR SUCH A SYSTEM**
LASTTÜRSYSTEM FÜR EIN FAHRZEUG SOWIE HÄNGENDE ANORDNUNG UND LASTTÜR FÜR EIN SOLCHES SYSTEM
SYSTÈME DE PORTE DE CHARGE POUR VÉHICULE ET MÉCANISME DE SUSPENSION ET PORTE DE CHARGE POUR UN TEL SYSTÈME

(30) Priority: 21.09.2010 SE 1050982
(43) Date of publication of application: 31.07.2013
(73) Proprietor: Komatsu Forest AB, 907 04 Umeå (SE)
(72) Inventor: ÅSTRÖM, Anders, S-922 67 Tavelsjö (SE)
(74) Representative: Zacco Sweden AB
(86) International application number: PCT/SE2011/051116
(87) International publication number: WO 2012/039663

(56) References cited:
- WO-A1-2008/147317
- DE-A1- 19 822 809
- DE-A1- 19 911 872
- SE-B- 370 360
- SU-A1- 1 652 131
- US-A- 3 450 222
- US-A1- 2002 064 434
- US-A1- 2010 104 406
- US-A1- 2010 104 409
- US-A1- 2010 104 409

## Description

The present invention relates to a load gate system for a vehicle equipped with a grip arrangement that can be pivoted and turned, preferably a forwarder or similar terrain-going vehicle for the handling of timber, which load gate system comprises not only a load gate that is intended to limit a forward part of a load compartment that is a part of the vehicle and which load gate comprises frame sections that, joined at their ends, form a surrounding principally square or rectangular frame, a structure that extends between the frame parts and by which the frame parts are mutually joined, but also a suspension arrangement by which it is intended that the load gate be supported on a frame, supported by wheels, that is part of the vehicle. The invention relates also to a load gate and to a vehicle, such as a forwarder, equipped with such a load gate system.

Forwarders and similar types of terrain-going vehicles have a load compartment that is principally limited by horizontal load bunks, vertical stakes and a forward load gate. It is the task of the load gate to separate the load compartment from the grip arrangement that can be pivoted and rotated of the forwarder and from a driver's cabin that is part of the vehicle, wherein the purpose of the load gate is to protect not only the driver's cabin but also a lower base that can be rotated in the horizontal plane and that is a part of the lifting crane from being impacted by timber or parts of trees that may move in an uncontrolled manner during transport. The load gate also makes easier the loading of timber onto the forwarder by being used as a stop surface whereby the timber is directed during loading through one end of the timber being placed in contact with the load gate before it is laid down into the load compartment. Thus, the location of the load gate is important, not least in order to protect not only the lower base of the lifting crane but also the driver's cabin from contact with the timber load. It is the task of the load gate also to form a covering protection of the load compartment that protects the load during transport and when the forwarder is being driven across terrain. If the terrain is difficult of access or if it consists of closely growing trees, there is a risk that the load of timber will become entangled with, or become stuck in, trees in the terrain. Thus, it is the task of the load gate also to prevent contact between the load of timber in the load compartment and trees or other obstacles in the terrain when the forwarder is driven in its normal direction of travel.

When handling timber, such as during loading and unloading, the load gate constitutes as such an obstacle for the efficient manoeuvering of the grip arrangement of the forwarder, which grip arrangement can be pivoted and rotated. When transferring timber into and out of the load compartment, the crane arm must be driven above the greatest height of the load gate. The crane operator must exercise great caution such that there is no risk of the crane arm colliding with the load gate during handling of the timber by means of the grip arrangement. A collision may result in expensive damage to not only the lifting crane but also the load gate. Such damage may involve expensive non-operational time for the forwarder, since the work must be interrupted while the damage is repaired.

US 2010/0104406 A1 describes a forwarder that, in order to reduce the risk of damage during the handling of timber with the grip arrangement, is provided with a load gate combination with a load gate and a suspension system for this. The suspension system allows the load gate to be raised and lowered. The load gate, furthermore, can be lowered backwards by the suspension system in the direction towards the load compartment to give increased accessibility during repair and maintenance. In order for it to be possible to move it out of the way during loading and unloading of timber with the grip arrangement, the load gate that can be lowered is designed as two load gate units, one inserted telescopically into the other, where the upper load gate unit seen in the vertical direction can be raised and lowered through the influence of a hydraulic cylinder. In addition to the load gate being, through its telescopic design, extremely liable to damage, it suffers from a further problem, namely that the view of the crane operator is considerably limited by the complicated design of the telescopic load gate with its double

Another similar load gate is known from US 2010/0104409 A1.

As has been mentioned above, it is the task of the load gate also to prevent contact between the load of timber in the load compartment and trees or other obstacles in the terrain when the forwarder is driven in its normal direction of travel. If the load of timber, or even if the load gate itself, should get caught in an obstacle in the terrain, there is a risk that parts of the forwarder such as the vertical stakes of the load compartment, or similar, will be damaged. In order to prevent contact with obstacles in the terrain, the load gate must be given such a large surface area or such an extent that it extends, with its surrounding outer frame, somewhat outside of the outermost parts of the load of timber. It should be realised that the requirements for a load gate that is overdimensioned in order to protect the load of timber when driving across terrain conflicts with the problems with the risks of collision between the crane arm and the load gate during the handling of timber by means of the grip arrangement, and it limits the ability of the vehicle to progress across dense terrain.

A first purpose of the present invention, therefore, is to achieve a load gate combination together with a load gate and a suspension arrangement for such that reduce the risk of damage and thus of expensive interruptions in operation during the handling of timber by the forwarder. This is particularly the case for damage during the loading and unloading of timber with the lifting crane of the forwarder, but also for damage that may arise during the transport of loads of timber by the forwarder across terrain. A second purpose is to make possible a more efficient handling of timber by a forwarder, and in particular to make possible simple and rapid loading and unloading of timber. A third purpose of the invention is to make easier the handling of timber that involves driving across terrain with a load on the forwarder.

The first purpose of the invention is achieved through the distinctive features that are specified in the attached claims. Other advantages of the inventions specified above are made clear by the non-independent claims.

The invention will be described below in more detail with reference to the attached drawings, of which:
Figure 1 shows a side view of a vehicle for the collection of felled trees that is equipped with a load gate combination comprising a load gate and a suspension arrangement for this, according to the invention,
Figure 2 shows a perspective view of the vehicle according to Figure 1,
Figure 3 shows a detailed view in perspective of a load gate not under the influence of any external force with a suspension arrangement arranged at it, and shown in a condition removed from the vehicle that is shown in Figures 1 and 2,
Figure 4 shows a detailed view in perspective of a load gate corresponding to that shown in Figure 3, but now under the influence of external forces, such as during a collision with a crane arm during the handling of timber,
Figure 5 shows a detailed view from the side of a load gate with a suspension arrangement associated with it, corresponding to the one shown in Figure 4,
Figure 6 shows a detailed view in perspective from behind of a load gate corresponding to that shown in Figure 5,
Figure 7 shows at a greater scale a section along a part of an extended stabiliser that is a component of the arrangement, and
Figure 8 shows schematically a hydraulic circuit diagram for the piston-cylinder units
   that are parts of the arrangement and are used for raising and lowering the load gate.

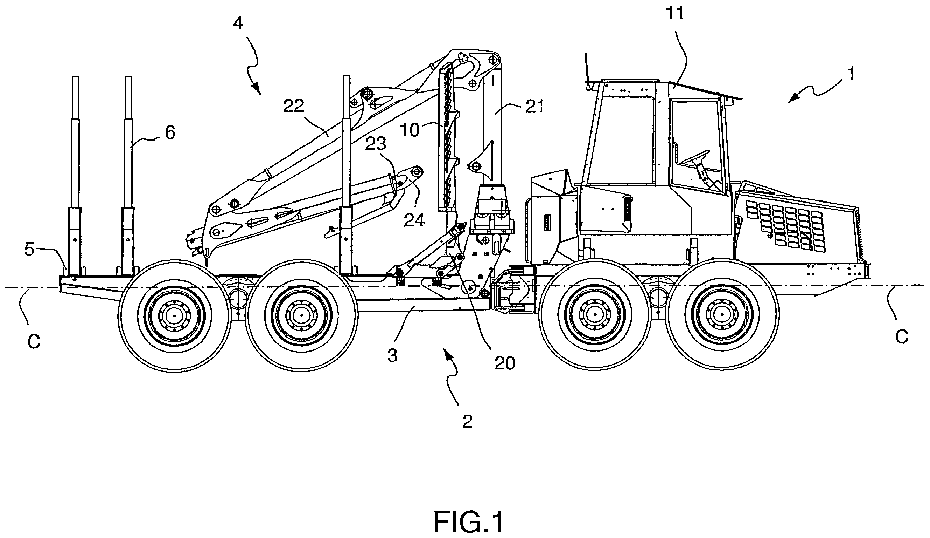

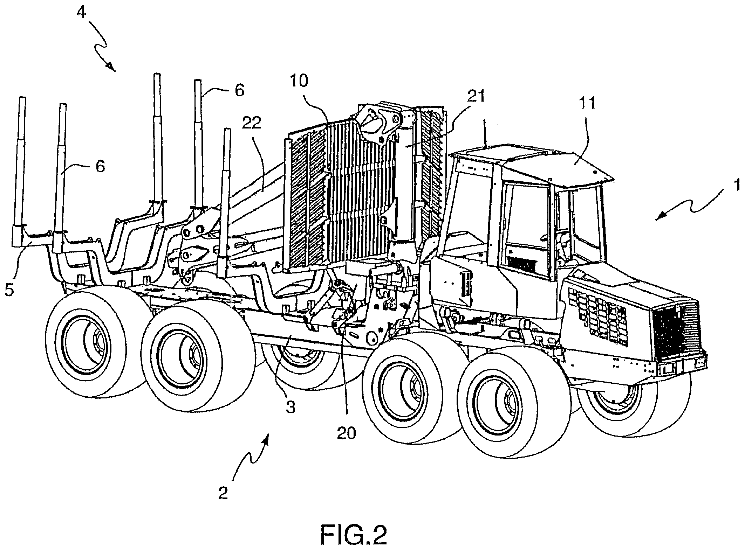

A vehicle is shown in Figures 1 and 2 in the form of a terrain-going forwarder that principally consists of a tractor 1 and a load carrier 2. The load carrier 2 is joined to the tractor 1 in a manner that allows pivoting and has a conventional load-bearing chassis provided with wheels and with longitudinal frame beams 3. The load carrier 2 has a load compartment 4 for the reception of timber, and that is limited by horizontal load bunks 5 with the associated vertical stakes 6 that define in pairs the respective long sides of the load compartment.

A load gate combination according to the present invention is arranged at the front end of the load carrier 2. The load gate combination includes not only a load gate 10 that separates the front short end of the load compartment 4 from a lift arrangement that can be manoeuvered and that is a part of the forwarder and in addition from a driver's cabin 11, but also a suspension arrangement 20 that supports the load gate on the frame beams of the load carrier.

The manoeuvrable lift arrangement comprises a two-part crane arm 22 that extends from a base 21 that has the nature of a pillar and a rotator 23 attached at the free end of this crane arm, by means of which rotator a grip arrangement 24 fixed to it and having two opposing forks can be rotated relative to the crane arm 22 and thereby can the grip arrangement be pivoted in the vertical and the horizontal plane. The load gate 10 arranged on the chassis 3 of the load carrier 2 constitutes a stopper that protects the pillar-like base 21 of the lifting crane and the driver's cabin 11 from impacts from the timber itself that is located in the load compartment 4. Furthermore, the load gate is used as a stopper against which one end of a bundle of logs can be placed in contact under the influence of a force for the directional adjustment and alignment of the bundle during loading (not shown in the drawings).

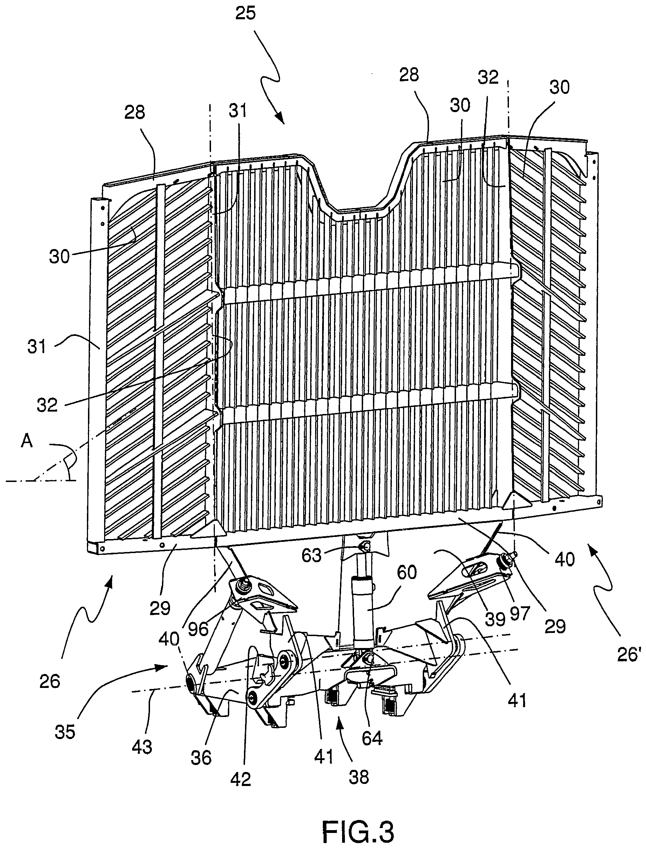

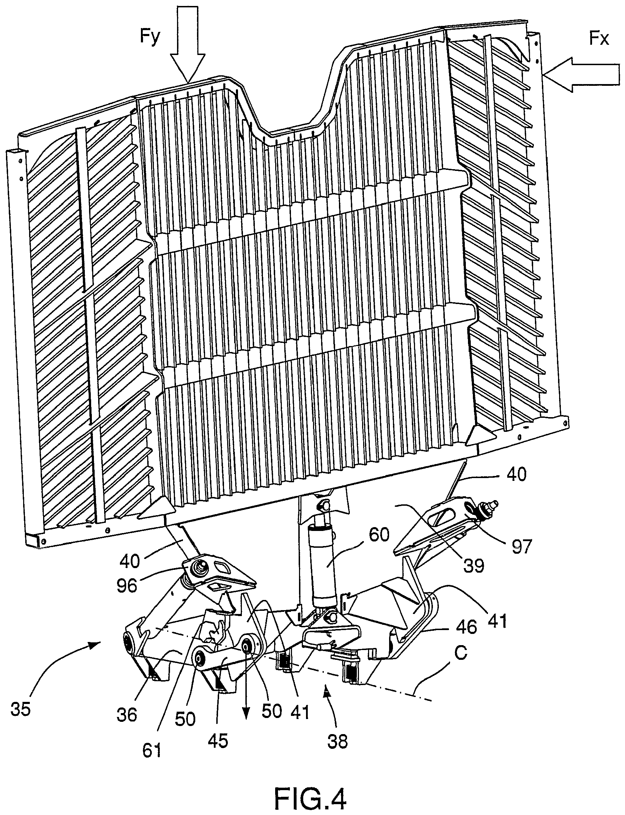

The load gate combination 10, 20 is shown in Figures 3-5 in views freed from other parts, for reasons of clarity. The load gate 10 that is a part of the load gate combination has a modular construction with exchangeable parts and it comprises a central principal gate section 25 and side gate sections 26, 26', one on each side of this, attached in a manner that allows them to be removed. As is made most clear by Figure 4, each of the said side gate sections 26, 26' is angled somewhat backwards in the direction towards the load compartment 4 around an axial line 31 that is perpendicular to the longitudinal direction of the gate. In order to demonstrate the resistance that is required against external forces of the type that may arise during collisions between the crane arm 22 and the load gate 10, each such load gate module 25, 26, 26' comprises a number of heavy-duty frame sections of profiled tube, which, joined at the ends, form a surrounding principally square or rectangular frame.

It is shown in more detail in Figure 3 and 4 that a first pair of parallel opposing frame sections 28, 29 in each such module 25, 26, 26' is mutually joined by a series of linear elements that have been set parallel in the form of struts 30 with the form of a flat steel bar, that as a lattice or grille are evenly distributed at mutual separations from each other between the second pair of parallel opposing frame sections 31, 32. In order to make it easier to see through the lattice and in order to obtain an improved capacity to absorb force, the struts 30 with the form of flat steel bars are oriented with their broader sides facing each other. In order to resist a force from above, from, for example, a crane arm 22 that collides while moving vertically with the upper edge of the load gate 10 (see the arrow Fy showing the force), the struts 30 of the central principal gate 25 extend linearly and essentially vertically between the two horizontal upper and lower frame sections 28, 29 of the central principal gate. In order to resist in a corresponding manner a force from the side, such as the force from, for example, a crane arm 22 that collides while moving horizontally with the side edge of the load gate 10 (see the arrow Fx showing the force), the struts of the relevant side gate section 26, 26' extend essentially horizontally or at a diagonal aspect with only a limited gradient at an angle A to the horizontal plane between the two vertically placed frame sections 31, 32. The term "limited gradient" is here used to denote an angle A that is greater than 0° and less than or equal to 45°. It should be realised that, as a consequence of this design of the structure with transverse struts 30 that mutually unite parallel opposing frame sections in each respective module 25, 26, 26', forces that arise during the collision will be efficiently transferred by the struts from the outer free frame section 28, 31 of a module to a more stable opposing frame section of the module that is located further inside the load gate. The combination of standing or vertical struts 30 for the central principal gate section 25 and lying or horizontal struts 30 for the two side gate sections 26, 26' has the further advantage that the selected different orientation for the inner lattices relative to the orientation of the load bunks 5 and the stakes 6 improves considerably the overview and view of the crane operator over the load compartment from the driver's cabin, without the capacity of the resulting load gate to absorb impacts being negatively affected. The reason for the considerably improved overview into the load compartment from the driver's cabin 11 is, quite simply, that the vertically standing struts of the central principal gate section stand in essentially counter-angled contrast to the lying bunks 5 of the load compartment, and in the same way the lying struts of the side gate sections 26, 26' stand in essentially counter-angled contrast with the standing stakes 6 of the load compartment. By using these contrasts, it will be easier for the operator to distinguish the various parts of the load compartment during the loading and unloading of timber. Furthermore, the advantage is obtained that the load gate is easy to manufacture, due to its simple design with few component parts. The load gate 10 can, through its modular design, be easily adapted to the various requirements that are placed on the load compartments of various dimensions, through altering the sizes and shapes of the side gate sections 26, 26' with the use of a central principal gate section 25 that is common to these.

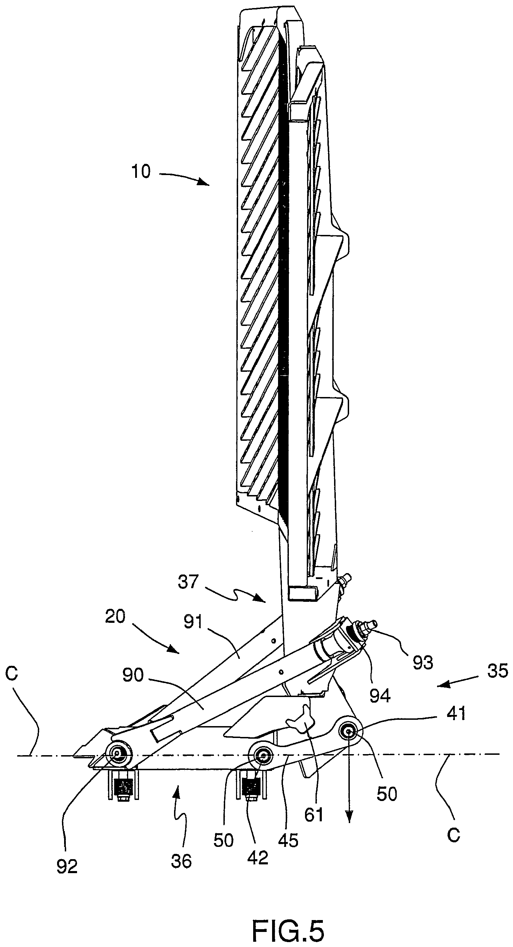

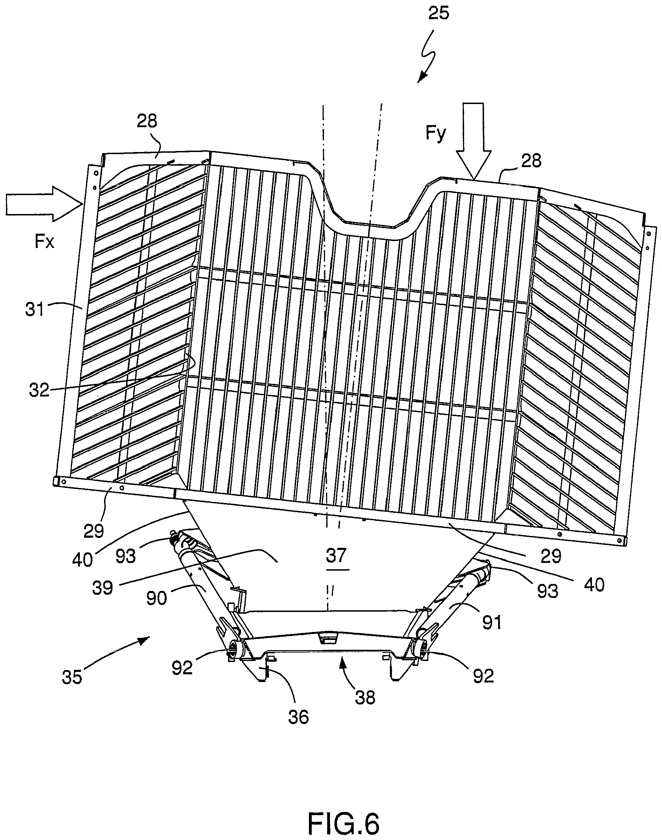

The suspension arrangement 20 that is a part of the invention comprises a means 35 that provides yield-mounting and that limits motion demonstrating a joint arrangement 35 by which the load gate 10 is supported in a manner that allows free pivoting on the extended chassis of the load carrier 2, through a support frame generally denoted by the reference number 36 (see Figures 5 and 6) and attached to the longitudinal beams 3 of the chassis. The support frame 36 is joined through a guide in a manner that allows sliding to the two longitudinal beams 3 that form the principal part of the lower frame or chassis of the load carrier 2. Since it is possible for the support frame 36 to slide, the load gate 10 can be displaced as a unit along the frame beams 3 and can be locked at a suitable position on the chassis. It is possible in this way to adjust in a simple manner the length of the load compartment 4. It is appropriate that the support frame 36 and thus the load gate 10 be positioned on the chassis through the influence of control and actuator means, for example hydraulically powered cylinders that provide force. In order for the means 35 that provides yield-mounting and that limits motion to form a freely pivoting unit in which the load gate can move essentially freely within a limited region, or in which it can essentially pivot relative to the chassis in a "floating" manner without coming into contact with the said chassis, the load gate 10 is provided with a frame, generally denoted by the reference number 37 (see Figures 5 and 6), designed to form an extension downwards of the central principal gate section 25 of the load gate. The expression "floating" is here used to denote the circumstance that forces that appear in the suspension 20 lack a defined point of attack, and thus it is not possible for torque to appear. The frame 37 demonstrates the form of a box whose dimensions decrease in the downward direction, which box is outwardly principally limited by a bottom 38, two principally parallel walls 39 that are joined to the bottom, and two side pieces 40 that are joined to the bottom in a manner that diverges up towards the load gate. Flat suspension plates 41 are, in the design shown, attached facing each other each in the transition between the converging side pieces 40 and the bottom 38 of the frame. A first transverse horizontal axis 42 extends through the two suspension plates 41 located on each side of the longitudinal axis C of the chassis whose separation exceeds the width of the chassis 3 or that of the two frame beams. A second transverse horizontal axis 43 extends in a similar manner though the support frame 36.

As is made most clear by Figure 5, the two transverse axes 42, 43 are located one on each side of the principal plane of the load gate 10, and at different heights. In order to ensure that the load gate 10 has properties that allow free pivoting, the means that provides yield-mounting and that limits motion has a pair of link arms 45, 46 that are located one on each side of the longitudinal axis C of the forwarder and whose separation from each other is greater than the width of the chassis 3 such that they can pivot in essentially vertical planes at the side of the chassis. The link arms 45, 46 are at their ends, at pegs 50, 51, fastened in a jointed manner between the suspension plates 41 and the support frame 36, whereby the joints of the links are defined by the said first and second transverse horizontal axes 42, 43. Spherical joint bearings are used also at these pegs 50, 51 in order to allow the link arms 45, 46 to both rotate and turn within the fastenings. A double-action hydraulic cylinder 60 is coupled between the frame 37 of the load gate 10 and the support frame 21 in order to allow the load gate to be lifted in the vertical direction to an upper working position and lowered to a lower inactive position. The load gate 10 is shown in Figure 3 relocated at its active upper working position with the aid of the hydraulic cylinder 60, and - as should be obvious from a more detailed study of the drawing - the motion of the load gate is limited vertically upwards, during relocation to its working position, through interaction between a stop peg 61 that is arranged at the relevant link arm 45, 46 and that is attached to the support frame 36.

As is made most clear by Figures 3 and 4, the double-action hydraulic cylinder 60 is, through pegs 63, 64, fastened in a jointed manner at one of its ends at the lower side edge 38 of the load gate 10, and fastened in a jointed manner at its second end to the support frame 36, and thus also at the chassis 3 of the load carrier 2. The pegs 63, 64 have spherical bearings in order to allow the hydraulic cylinder 60 to rotate and turn within the fastenings.

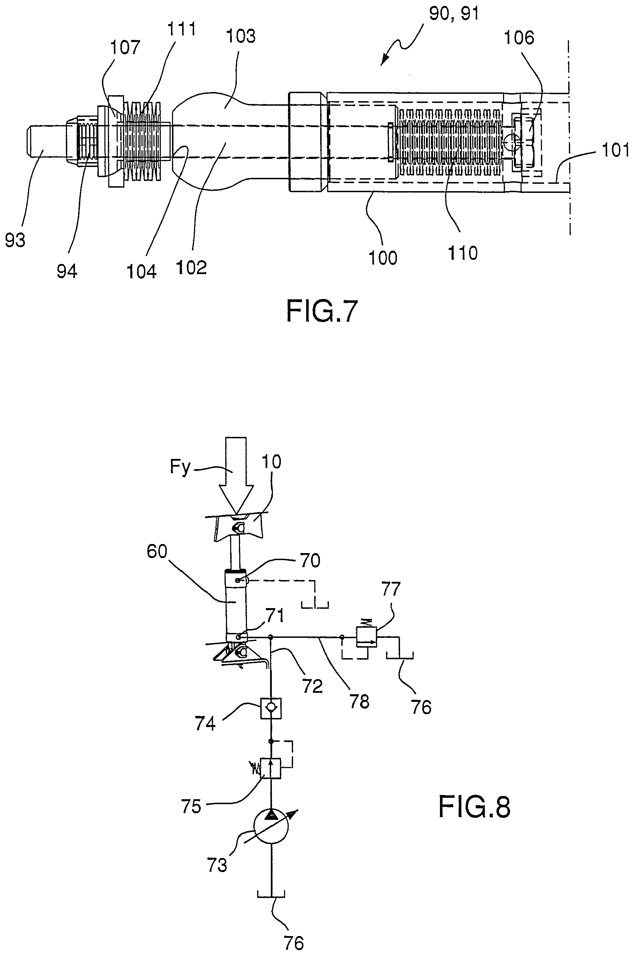

The hydraulic circuit that is used for manoeuvering the load gate 10 up and down is shown schematically in Figure 8, and - as the drawing makes clear - one connection 70 of the double-action hydraulic cylinder 60, and thus also one of its chambers, is in communication with a storage tank, which is simply suggested using a dashed line in the drawing. The second connection 71 of the hydraulic cylinder 60 and its associated second chamber are in communication through a line 72 with a pump 73 with a displacement that can be varied, through a non-return valve 74 and a pressure-reduction valve 75, whereby the said non-return valve may be, but is not required to be, under remote control such that the closure effect can be simply released by means of a separate control pressure. The pressure-reduction valve 75 forms a part of a load-reduction circuit with the task of removing load from the pump 73 during that part of the work cycle during which the load gate 10 is located at its upper working position, whereby a pre-determined working pressure is achieved in the hydraulic circuit. The second side of the pump 73 is connected to the storage tank 76. Due to the fact that the pump 73 is in direct connection with the hydraulic cylinder 60, the load gate 10 moves to its upper active position immediately when the lorry or forwarder is started. An overflow valve 77 is connected to the second connection 71 of the hydraulic cylinder 60 through a line 78. The task of the overflow valve 77 is to deal with the excess of hydraulic medium that arises at an elevated pressure or in the event of a pressure pulse occurring in the system whereby the hydraulic medium is drained to the storage tank 76.

It should be realised that if the load gate 10 is under the influence of a downwards-directed force, a pressure pulse arises in the second chamber of the hydraulic cylinder 60. Such pressure pulses can arise in the case in which the load gate 10 is impacted by an external force from above as is illustrated by the arrow Fy (see also Figure 4). Such an external force may be the result of the crane arm 22 colliding during the execution of a downward motion with the upper part of the load gate 10. Through the choice of suitable properties for the overflow valve 77 with respect to the pre-determined pressure at which the valve is to open for drainage of the hydraulic medium to the storage tank 76, the type of damage that a collision with the crane arm 22 can result in can be essentially avoided through the load gate 10 being allowed to pivot away in the downwards direction. The force from such an impact is led by the vertical struts 30 of the load gate 10 from the outer frame section 28 of the central principal gate section 25 in a linear direction down to the opposing frame section 29 of the load gate, which frame section is located at the bottom of the load gate and is supported by the heavy-duty frame 37. The loading can most closely be regarded as a linear pressure load, essentially without the appearance of any torque.

In order to control the free pivoting motion of the load gate 10 in a manner that limits pivoting during free pivoting around the longitudinal axis C of the forwarder, the means 35 that provides yield-mounting and that limits motion comprises a pair of extended sprung stabilisation struts 90, 91. As is made most clear by Figures 3 and 4, the sprung stabilisation struts 90, 91 are located one on each side of the longitudinal axis C and, based on the support frame 36 of the chassis, these struts are arranged as braces with a gradient at an angle up towards the frame 37 of the load gate 10. Each stabilisation strut 90, 91 comprises a lower end that is jointed fastened in the support frame 36 at a peg 92 with a spherical bearing and an upper end that is fastened in a fastening 96, 97 that is arranged at the frame 37 of the load gate 10 through a threaded peg 93 that has a certain joint capacity through an associated spring 94 and locking nut, where the peg is arranged to extend through a hole in the fastening and is locked to this through interaction with a locking nut 95 and an intermediate spring arranged on the peg.

A cross-section through an upper part of a sprung stabilisation strut 90, 91 is shown at a higher scale in Figure 7. Each one of the said stabilisation struts 90, 91 comprises at its upper end, which faces the load gate, a housing 100 with a cylindrical drilling 101 through which a rod 102 extends. The housing 100 has a solid end gable 103 that is incorporated in the housing but not fixed attached to it and that demonstrates a central opening 104 through which one end of the rod 102 extends out from the housing, which end forms at the same time the above-mentioned threaded peg 93. A first thickened part 106 is arranged at the second end of the rod 102, which is inserted into the housing 100, whereby a similar second thickened part 107 is arranged at the free end of the rod, which lies outside of the housing. Each one of the said thickened parts 106, 107 comprises a washer attached to the rod 102 in a manner that allows it to be removed. The axial displacement of the rod 102 in the housing 100 is limited by the influence of a first and a second member 110, 111 that can be elastically deformed and that are located surrounding the rod, one on each opposite side of the end gable 103. The two elastic members 110, 111 are constituted in the embodiment described here by ring-shaped compressive springs, but it would, of course, be possible for them to be constituted by any suitable elastically deformable member at all, such as, for example, packages of spring washers. It should be realised that the sprung stabilisation strut 90, 91 offers a spring action in opposing axial directions through the influence of the said respective springs 110, 111 each on one side of the end gable 103. Due to the fact that the locking nut 95 can be freely placed on the threaded end 93 or peg of the rod 102, the adjustment and alignment of the position of the load gate 10, and its level relative to the chassis of the load carrier 2, are facilitated.

It is intended that the load gate system 10, 20 shown in the drawings work in the following manner: The force arrow Fy in Figure 4 is used to illustrate the external force that arises during a collision between the crane arm 22 and the upper edge 28 of the central load gate 25 during handling of timber, during, for example, vertical lowering of a load of timber down into the load compartment. The energy from the collision is led through the vertical struts 30 of the load-absorbing structure of the central load gate and is captured in a flexible and yielding manner by the means 35 that provides yield-mounting and that limits motion of the suspension arrangement 20, whereby the load gate in its entirety will move downwards in the manner that is shown in Figures 4, 5 and 6. Due to the fact that not only the double-action hydraulic cylinder 60 that is a part of the suspension arrangement 20 but also the two sprung struts 90, 91 that are arranged at the sides of the load gate offer a yielding effect (at the overflow valve and the pressure springs, respectively), the energy from the collision will be absorbed in a yielding manner. The same effect will arise, in a similar manner during a collision that occurs between the crane arm 22 and one of the side edges of the side gate sections 26, 26' during the handling of timber, if the crane arm, for example, is located too low during the pivoting of a load in the horizontal plane in towards the load compartment 4, as is illustrated by the arrow Fx showing the force in Figure 4. In this case the force from the collision is led linearly and principally horizontal in a sideways direction through the lying struts 30 of the side gate sections 26, 26' in towards the centre of the load gate. The load gate 10 in its entirety is captured in a flexible and yielding manner by the means that provides yield-mounting and that limits motion of the suspension arrangement 20, whereby the load gate in its entirety will be displaced in its plane perpendicular to the longitudinal axis C of the forwarder. Since the load gate is freely pivoting with the lack of a clearly defined point of torque, its pivoting motion will vary, depending on the point of attack of the external force Fx on the side gate section 26, 26'.

The invention is not limited to what has been described above and shown in the drawings: it can be changed and modified in several different ways within the scope of the innovative concept defined by the attached patent claims.

## Claims

1. A load gate combination for a vehicle of the type that includes a chassis (3) provided with wheels, such as a forwarder for the collection and transport of felled logs or similar, and comprising not only a load gate (10) intended to separate a load compartment (4) arranged in the vehicle from other units that are parts of the vehicle such as a lifting crane (22) and a driver's cabin (11), but also a suspension arrangement (20) that, mounted on the chassis (3) of the vehicle, supports the load gate (10) in a manner that allows it to pivot, **characterised in**
**that** the load gate (10) is constructed to allow connection to one end of a means (90, 91; 35) that provides yield-mounting and that limits motion,
**that** the suspension arrangement (20) comprises the means (90, 91; 35) that provides yield-mounting and that limits motion, and comprises a support frame (36) arranged on the chassis (3) constructed to allow the connection of a second end of the said means (90, 91; 35) that provides yield-mounting and that limits motion,
**that** the load gate (10) is supported on the support frame (36) in such a manner that it can move freely relative to the chassis (3) in its principal plane through the interaction between the said means (90, 91; 35) that provides yield-mounting and that limits motion arranged between the load gate (10) and the support frame (36), and
**that** the means (90, 91; 35) that provides yield-mounting and that limits motion comprises a pair of extended sprung stabilisation struts located one on each side of the centre line (C) of the vehicle, which stabilisation struts are arranged to offer a yielding effect in opposing axial directions.

2. The load gate combination according to claim 1, whereby the load gate (10) comprises at its bottom a frame (37) that
- is assigned a joint (42) on each side of the longitudinal axis (C) of the vehicle for the connection of one end of a link arm (45, 46) that is a part of the means (90, 91; 35) that provides yield-mounting and that limits motion, and
- that the support frame (36) of the suspension arrangement (20) is assigned a joint (43) on each side of the longitudinal axis (C) of the vehicle for the connection of a second end of the link arm (45, 46) that is a part of the means (90, 91; 35) that provides yield-mounting and that limits motion.

3. The load gate combination according to any one of claims 1-2, whereby the load gate (10) is so supported on the support frame (36) that it can move in a freely pivoting manner relative to the chassis (3), through interaction between the means (90, 91; 35) that provides yield-mounting and that limits motion.

4. The load gate combination according to any one of claims 1-3, whereby
- the load gate (10) comprises a joint (63) for the connection of a first end of a double-action piston-cylinder unit (60) activated by a pressurised medium,
- that the support frame (36) of the suspension arrangement (20) comprises a joint (64) for the connection of a second end of a double-action piston-cylinder unit (60) activated by a pressurised medium; and that the load gate can be vertically raised and lowered by the influence of a double-action piston-cylinder unit (60) activated by a pressurised medium and arranged between the said joints (63, 64).

5. The load gate combination according to claim 4, whereby the joints (63, 64) of the double-action piston-cylinder unit (60) at the load gate (10) and the support frame (36) are located along a line that is perpendicular to the centre line (C) of the vehicle and which line extends centrally through the load gate 10.

6. The load gate combination according to claims 4-5, whereby one chamber of the double-action piston-cylinder unit (60) is assigned a pressure-limitation means (77) that drains the said chamber at a pressure that exceeds a pre-determined value.

7. The load gate combination according to any one of claims 2-6, whereby the joints (42, 43) of the link arms (45, 46) at the load gate (10) and the support frame (36) are located one on each side of the principal plane of the load gate when viewed in the vertical plane.

8. The load gate combination according to claim 7, whereby the joints (42, 43) of the link arms (45, 46) at the load gate (10) and the support frame (36) are located at different levels of height when the load gate (10) is located at its active upper working position.

9. The load gate combination according to any one of claims 2-8, whereby the means (90, 91; 35) that provides yield-mounting and that limits motion comprises spherical joint bearings at least in the joints (42, 43) of the link arms (45, 46) with the frame (37) and with the support frame (36).

10. The load gate combination according to any one of claims 2-9, whereby the link arms (45, 46) of the means (90, 91; 35) that provides yield-mounting and that limits motion, which link arms extend between the frame (37) and the support frame (36), are arranged to pivot in parallel planes, each one of which is located beside the chassis (3).

11. A vehicle, such as a forwarder for the collection and transport of felled logs or similar, and of the type that includes a chassis (3) provided with wheels, and comprising not only a load gate (10) intended to separate a load compartment (4) arranged in the vehicle from other units that are parts of the vehicle such as a lifting crane (22) and a driver's cabin (11), but also a suspension arrangement (20) that, mounted on the chassis (3) of the vehicle, supports the load gate (10) in a manner that allows it to pivot, **characterised in that** it comprises a load gate combination as defined in any one of claims 1-10.

## Patentansprüche

1. Ladetorkombination für ein Fahrzeug des Typs, welcher ein mit Rädern versehenes Fahrgestell (3) wie einen Forwarder zum Sammeln und Transportieren von gefällten Holzstämmen oder dergleichen umfasst, und nicht nur ein Ladetor (10), das dazu bestimmt ist, einen im Fahrzeug angeordneten Laderaum (4) von anderen Einheiten, die Teile des Fahrzeugs sind wie ein Hubkran (22) und eine Fahrerkabine (11), zu trennen, sondern auch eine Aufhängevorrichtung (20) umfasst, die am Fahrgestell (3) des Fahrzeugs montiert das Ladetor (10) derart trägt, dass es schwenkbar ist, **dadurch gekennzeichnet,**
**dass** das Ladetor (10) so ausgebildet ist, dass es eine Verbindung mit einem Ende eines eine nachgiebige Montage bereitstellenden und eine Bewegung begrenzenden Mittels (90, 91; 35) ermöglicht,
**dass** die Aufhängevorrichtung (20) das eine nachgiebige Montage bereitstellende und eine Bewegung begrenzende Mittel (90, 91; 35) umfasst und einen Tragrahmen (36) umfasst, der am Fahrgestell (3) angeordnet ist, das derart ausgebildet ist, dass die Verbindung eines zweiten Endes des Mittels (90, 91; 35) ermöglicht wird, das eine nachgiebige Montage bereitstellt und das eine Bewegung begrenzt,
**dass** das Ladetor (10) relativ zum Fahrgestell (3) frei beweglich an dem Tragrahmen (36) in seiner Hauptebene durch die Wechselwirkung zwischen den Mitteln (90, 91; 35) gelagert ist, das eine nachgiebige Montage bereitstellt und das zwischen dem Ladetor (10) und dem Tragrahmen (36) angeordnete Bewegung begrenzt, und
**dass** das eine Streckmontage bereitstellende und eine Bewegung begrenzende Mittel (90, 91; 35) ein Paar von auf jeder Seite der Mittellinie (C) des Fahrzeugs angeordneten, ausgestrecktenen, federnden Stabilisierungsstreben umfasst, welche Stabilisierungsstreben so angeordnet sind, dass sie in entgegengesetzten axialen Richtungen eine nachgebende Wirkung ausüben.

2. Ladetorkombination nach Anspruch 1, wobei das Ladetor (10) an seinem Boden einen Rahmen (37) umfasst, der
- auf jeder Seite der Längsachse (C) des Fahrzeugs einem Gelenk (42) zum Verbinden eines Endes eines Lenkerarms (45, 46) zugeordnet ist, der ein Teil des eine nachgiebige Montage bereitstellenden und eine Bewegung begrenzenden Mittels (90, 91; 35) ist, und
- dass der Tragrahmen (36) der Aufhängevorrichtung (20) auf jeder Seite der Längsachse (C) des Fahrzeugs einem Gelenk (43) zum Verbinden eines zweiten Endes des Lenkerarms (45, 46) zugeordnet ist, der ein Teil des eine nachgiebige Montage bereitstellenden und eine Bewegung begrenzenden Mittels (90, 91; 35) ist.

3. Ladetorkombination nach einem der Ansprüche 1 bis 2, wobei das Ladetor (10) so auf dem Tragrahmen (36) gelagert ist, dass es durch Interaktion zwischen den Mitteln (90, 91; 35), das eine nachgiebige Montage bereitstellt und eine Bewegung begrenzt, relativ zum Fahrgestell (3) frei schwenkbar beweglich ist.

4. Ladetorkombination nach einem der Ansprüche 1 bis 3, wobei
- das Ladetor (10) ein Gelenk (63) zum Verbinden eines ersten Endes einer durch ein unter Druck stehendes Medium aktivierten doppeltwirkenden Kolben-Zylinder-Einheit (60) umfasst,
- dass der Tragrahmen (36) der Aufhängevorrichtung (20) ein Gelenk (64) zum Verbinden eines zweiten Endes einer doppeltwirkenden Kolben-Zylinder-Einheit (60) umfasst, die durch ein unter Druck stehendes Medium aktiviert wird, und dass das Ladetor durch den Einfluss einer doppeltwirkenden Kolben-Zylinder-Einheit (60) vertikal hebbar und senkbar ist, die durch ein unter Druck stehendes Medium aktiviert und zwischen den Gelenken (63, 64) angeordnet ist.

5. Ladetorkombination nach Anspruch 4, wobei die Gelenke (63, 64) der doppeltwirkenden Kolben-Zylinder-Einheit (60) am Ladetor (10) und am Tragrahmen (36) entlang einer Linie angeordnet sind, die senkrecht zur Mittellinie (C) des Fahrzeugs steht, und welche Linie sich mittig durch das Ladetor 10 erstreckt.

6. Ladetorkombination nach den Ansprüchen 4 bis 5, wobei eine Kammer der doppeltwirkenden Kolben-Zylinder-Einheit (60) einem Druckbegrenzungsmittel (77) zugeordnet ist, das die Kammer bei einem Druck ablässt, der einen vorgegebenen Wert überschreitet.

7. Ladetorkombination nach einem der Ansprüche 2 bis 6, wobei die Gelenke (42, 43) der Lenkerarme (45, 46) am Ladetor (10) und am Tragrahmen (36) in der vertikalen Ebene betrachtet auf jeder Seite der Hauptebene des Ladetors angeordnet sind.

8. Ladetorkombination nach Anspruch 7, wobei die Gelenke (42, 43) der Lenkerarme (45, 46) am Ladetor (10) und am Tragrahmen (36) in unterschiedlichen Höhenstufen angeordnet sind, wenn sich das Ladetor (10) in seiner aktiven oberen Arbeitsstellung befindet.

9. Ladetorkombination nach einem der Ansprüche 2 bis 8, wobei das eine nachgiebige Montage bereitstellende und eine Bewegung begrenzende Mittel (90, 91; 35) sphärische Gelenklager zumindest in den Gelenken (42, 43) der Lenkerarme (45, 46) mit dem Rahmen (37) und mit dem Tragrahmen (36) umfasst.

10. Ladetorkombination nach einem der Ansprüche 2 bis 9, wobei die Lenkerarme (45, 46) des eine nachgiebige Montage bereitstellenden und eine Bewegung begrenzenden Mittels (90, 91; 35), welche Lenkerarme sich zwischen dem Rahmen (37) und dem Tragrahmen (36) erstrecken, zum Schwenken in parallelen Ebenen angeordnet sind, von denen sich jeder neben dem Fahrgestell (3) befindet.

11. Fahrzeug, wie ein Forwarder zum Sammeln und Transportieren von gefällten Baumstämmen oder dergleichen, und des Typs, der ein mit Rädern versehenes Fahrgestell (3) umfasst, und nicht nur ein Ladetor (10), das dazu bestimmt ist, einen im Fahrzeug angeordneten Laderaum (4) von anderen Einheiten, die Teile des Fahrzeugs sind wie beispielsweise ein Hubkran (22) und eine Fahrerkabine (11), zu trennen, sondern auch eine Aufhängevorrichtung (20) umfasst, die am Fahrgestell (3) des Fahrzeugs montiert ist und das Ladetor (10) derart trägt dass es schwenkbar ist, **dadurch gekennzeichnet, dass** es eine Ladetorkombination nach einem der Ansprüche 1 bis 10 umfasst.

## Revendications

1. Combinaison de porte de charge pour un véhicule du type comprenant un châssis (3) muni de roues, tel qu'un porteur pour la collecte et le transport de bois abattu ou similaires, et comprenant non seulement une porte de charge (10) destinée à séparer un compartiment de charge (4) disposé dans le véhicule à partir d'autres unités faisant partie du véhicule, telles qu'une grue de levage (22) et une cabine du conducteur (11), mais également un dispositif de suspension (20) qui, lorsqu'il est monté sur le châssis (3) du véhicule, supporte la porte de charge (10) de manière à permettre son pivotement, **caractérisée en**
**ce que** la porte de charge (10) est conçue pour permettre la connexion à une extrémité d'un moyen (90, 91; 35) qui assure un montage élastique et limite le mouvement,
**en ce que** le dispositif de suspension (20) comprend le moyen (90, 91; 35) qui assure un montage élastique et limite le mouvement, et comprend un cadre de support (36) disposé sur le châssis (3) conçu pour permettre la connexion d'une deuxième extrémité dudit moyen (90, 91; 35) qui assure un montage élastique et limite le mouvement,
**en ce que** la porte de charge (10) est supportée sur le cadre de support (36) de sorte qu'elle puisse se déplacer librement par rapport au châssis (3) dans son plan principal par l'interaction entre le moyen (90, 91; 35) qui assure un montage élastique et limite le mouvement arrangé entre la porte de charge (10) et le cadre de support (36), et
**en ce que** le moyen (90, 91; 35) qui assure un montage élastique et limite le mouvement comprend une paire de jambes de stabilisation à ressort allongées situées l'un de chaque côté de la ligne médiane (C) du véhicule, lesdites jambes de stabilisation étant agencées pour offrir un effet d'élasticité dans des directions axiales opposées.

2. Combinaison de porte de charge selon la revendication 1, dans laquelle la porte de charge (10) comprend à sa base un cadre (37) auquel
- est associé un joint (42) sur chaque côté de l'axe longitudinal (C) du véhicule pour la connexion d'une extrémité d'un bras de liaison (45, 46) faisant partie du moyen (90, 91; 35) qui assure un montage élastique et limite le mouvement, et
- qu'au cadre de support (36) du dispositif de suspension (20) est associé un joint (43) sur chaque côté de l'axe longitudinal (C) du véhicule pour la connexion d'une deuxième extrémité d'un bras de liaison (45, 46) faisant partie du moyen (90, 91; 35) qui assure un montage élastique et limite le mouvement.

3. Combinaison de porte de charge selon l'une quelconque des revendications 1 à 2, dans laquelle la porte de charge (10) est supportée sur le cadre de support (36) de sorte qu'elle puisse se déplacer librement de manière pivotante par rapport au châssis (3), par l'interaction entre le moyen (90, 91; 35) qui assure un montage élastique et limite le mouvement.

4. Combinaison de porte de charge selon l'une quelconque des revendications 1 à 3, dans laquelle
- la porte de charge (10) comprend un joint (63) pour la connexion d'une première extrémité d'une unité piston-cylindre à double effet (60) activée par un milieu sous pression,
- le cadre de support (36) du dispositif de suspension (20) comprend un joint (64) pour la connexion d'une deuxième extrémité d'une unité piston-cylindre à double effet (60) activée par un milieu sous pression ; et que la porte de charge peut être levée et abaissée verticalement sous l'influence d'une unité piston-cylindre à double action (60) activée par un milieu sous pression et agencée entre lesdites joints (63, 64).

5. Combinaison de porte de charge selon la revendication 4, dans laquelle les joints (63, 64) de l'unité piston-cylindre à double effet (60) au niveau de la porte de charge (10) et du cadre de support (36) sont situés le long d'une ligne perpendiculaire à la ligne médiane (C) du véhicule et qui s'étend centralement à travers la porte de charge (10).

6. Combinaison de porte de charge selon les revendications 4 à 5, dans laquelle une chambre de l'unité piston-cylindre à double effet (60) est attribuée d'un moyen de limitation de pression (77) qui draine ladite chambre à une pression supérieure à une valeur prédéterminée.

7. Combinaison de porte de charge selon l'une quelconque des revendications 2 à 6, dans laquelle les joints (42, 43) des bras de liaison (45, 46) au niveau de la porte de charge (10) et du cadre de support (36) sont situés un sur chaque côté du plan principal de la porte de charge vue dans le plan vertical.

8. Combinaison de porte de charge selon la revendication 7, dans laquelle les joints (42, 43) des bras de liaison (45, 46) au niveau de la porte de charge (10) et du cadre de support (36) sont situés à différents niveaux de hauteur lorsque la charge la porte (10) est située dans sa position de travail supérieure active.

9. Combinaison de porte de charge selon l'une quelconque des revendications 2 à 8, dans laquelle le moyen (90, 91; 35) qui assure un montage élastique et limite le mouvement comprend des paliers à rotule au moins dans les joints (42, 43) des bras de liaison (45, 46) avec le cadre (37) et avec le cadre de support (36).

10. Combinaison de porte de charge selon l'une quelconque des revendications 2 à 9, dans laquelle les bras de liaison (45, 46) du moyen (90, 91; 35) qui assure un montage élastique et limite le mouvement, lesdits bras de liaison s'étendant entre le cadre (37) et le cadre de support (36), sont agencés pour pivoter dans des plans parallèles, chacun d'eux étant situé à côté du châssis (3).

11. Véhicule, tel qu'un porteur pour la collecte et le transport de bois abattu ou similaires, et du type comprenant un châssis (3) muni de roues, et comprenant non seulement une porte de charge (10) destinée à séparer un compartiment de charge (4) disposé dans le véhicule à partir d'autres unités faisant partie du véhicule, telles qu'un grue de levage (22) et une cabine du conducteur (11), mais également un dispositif de suspension (20) qui, lorsqu'il est monté sur le châssis (3) du véhicule, supporte la porte de charge (10) de manière à permettre son pivotement, **caractérisée en ce qu'**il comprend une combinaison de porte de charge telle que définie dans l'une quelconque des revendications 1 à 10.
